# EUROPÄISCHE PATENTANMELDUNG

(11) **EP 4 324 555 A1**
(43) Veröffentlichungstag der Anmeldung: **21.02.2024**
(21) Anmeldenummer: 22190680.3
(22) Anmeldetag: 17.08.2022
(51) Int. Cl.: B01J 23/63, B01J 35/00, B01J 23/10, B01J 23/46, B01D 53/94

(54) **RUTHENIUM-HALTIGE KATALYTISCH WIRKSAME ZUSAMMENSETZUNG FÜR KATALYSATOREN ZUR ABGASNACHBEHANDLUNG**

(71) Anmelder: Heraeus Precious Metals GmbH & Co. KG, 63450 Hanau (DE)
(72) Erfinder: DR. BONIFER, Marcus, 63450 Hanau (DE); DR. JOSHI, Pragati, 63450 Hanau (DE)
(74) Vertreter: Heraeus IP

(57) **Zusammenfassung**

Die vorliegende Erfindung betrifft eine Ruthenium-haltige katalytisch wirksame Zusammensetzung für Katalysatoren zur Abgasnachbehandlung, die ein mindestens mit Ruthenium ausgestattetes dotiertes refraktäres Oxid ausgewählt aus der Gruppe bestehend aus Aluminiumoxid, Magnesiumoxid, Siliziumoxid, Molybdänoxid, Wolframoxid, Titanoxid, deren Mischungen und Verbundoxiden von zwei oder mehr hiervon und ein Cer-Zirkonium-Oxid, das mindestens ein von Cer verschiedenes Element aus der Gruppe der seltenen Erden umfasst, enthält. Außerdem betrifft die Erfindung eine Zubereitung enthaltend die katalytisch wirksame Zusammensetzung, Verfahren zu deren Herstellung, einen Katalysator mit der katalytisch wirksamen Zusammensetzung, sowie ein Verfahren, in dem die Zusammensetzung verwendet wird.

## Beschreibung

Die vorliegende Erfindung betrifft eine Ruthenium-haltige katalytisch wirksame Zusammensetzung für Katalysatoren zur Abgasnachbehandlung, eine Zubereitung enthaltend die katalytisch wirksame Zusammensetzung, Verfahren zu deren Herstellung, einen Katalysator mit der katalytisch wirksamen Zusammensetzung, sowie ein Verfahren, in dem die Zusammensetzung verwendet wird.

In den Abgasemissionen von chemischen, industriellen oder brennstoffverbrauchenden Prozessen, beispielsweise aus Verbrennungsanlagen, Gasturbinen, Industrieanlagen oder Verbrennungsmotoren, finden sich eine Reihe gefährlicher oder umweltschädlicher Verbindungen. Schon seit langer Zeit wird insbesondere bei Kraftfahrzeugen das Abgas des Verbrennungsmotors mit Hilfe eines 3-Wege-Katalysators nachbehandelt. Dabei besteht die Aufgabe des Katalysators darin, die bei der Verbrennung entstehenden Schadstoffe, insbesondere Kohlenwasserstoffe (HC), Kohlenstoffmonoxid (CO) und Stickoxide (NOₓ) in die ungiftigen Stoffe Kohlenstoffdioxid (CO₂), Wasser (H₂O) und Stickstoff (N₂) umzuwandeln. Neben dem 3-Wege-Katalysator sind Oxidationskatalysatoren und NOₓ-Speicherkatalysatoren am weitesten verbreitet.

Solche Katalysatoren enthalten typischerweise mindestens eine katalytisch aktive Edelmetallkomponente. Die Edelmetalle sind dabei auf ein Trägermaterial aufgebracht und bilden die aktiven Zentren auf der Oberfläche des Katalysators. Beispielsweise enthalten Katalysatoren, die für die Oxidationsreaktionen zur Abgasnachbehandlung verwendet werden, im Allgemeinen Platin, Palladium, Iridium und Rhodium auf einem hitzebeständigen Träger wie Aluminiumoxid, meist vermischt mit einem Sauerstoffspeichermaterial, aufgebracht auf einem inerten Substrat. Bei den Substraten handelt es sich in der Regel um Wabenkörper aus einem keramischen Material (z. B. Cordierit) oder einem metallischen Material (z. B. FeCrAI).

Aufgrund der hohen Kosten für große Mengen von Edelmetallen gibt es jedoch Bestrebungen, den Gehalt der Edelmetalle in den Katalysatoren zu verringern und vor allem Rhodium zumindest teilweise durch Alternativen zu ersetzen. Darüber hinaus besteht der Wunsch nach Katalysatoren, die weniger kosten, aber in ähnlicher Weise in der Lage sind, Schadstoffe aus Abgasen von Verbrennungsreaktionen, beispielsweise aus den Emissionen von Chemieanlagen oder Kraftfahrzeugen, zu entfernen. Ruthenium stellt eine kostengünstigere Alternative zu Rhodium als aktive katalytische Spezies dar.

Die Verwendung von Ruthenium-haltigen Katalysatoren zur Reduktion von NOₓ und Oxidation von CO und Kohlenwasserstoffen ist prinzipiell bekannt. Ein Problem bei der Verwendung von Ruthenium ist die Neigung des Edelmetalls zur Bildung von leicht flüchtigen und toxischen Oxiden, was die Haltbarkeit solcher Systeme beeinträchtigt. Beispielsweise offenbart die US 2017107880 A1 die Verwendung eines Ruthenium-haltigen Abgas-Katalysators zur NOₓ-Reduktion. Jedoch ist für eine hohe Aktivität und Selektivität des Katalysators eine Regulierung des Abgases notwendig, um reduzierende Bedingungen zu gewährleisten.

Die US 2006034740 A1 offenbart zur Stabilisierung die Kombination von Ruthenium mit einem weiteren Edelmetall auf einem Aluminiumoxid-Trägermaterial. In der US 2003144143 A1 wird vorgeschlagen, zur Stabilisierung von Ruthenium-haltigen Aluminiumoxid basierten Katalysatoren Zirkonoxide und Zinnoxid einzusetzen.

Die US 2018229220 A1 offenbart Katalysatoren zur Entfernung von flüchtigen organischen Verbindungen (*engl. volatile organic compounds, VOCs*) aus Industrieabgasen, die neben Ruthenium und hitzebeständigen Mischoxiden zur Stabilisierung des Katalysatorsystems Zinnoxid und Silica enthalten und optional weitere oxidische Stabilisatoren. Die Herstellung der Katalysatoren erfolgt über Washcoat-Verfahren, in denen das Ruthenium als aktive katalytische Spezies gleichmäßig auf alle Trägermaterialien aufgebracht wird.

Die Aufgabe der vorliegenden Erfindung bestand in der Bereitstellung einer Rutheniumenthaltenden katalytisch wirksamen Zusammensetzung für Katalysatoren zur Abgasnachbehandlung, die ein günstiges Light-off Verhalten sowie eine erhöhte Stabilität aufweist. Insbesondere war es Aufgabe, eine katalytisch wirksame Zusammensetzung bereitzustellen, die die Verwendung kostengünstiger metallischer Spezies in Katalysatorsystemen ermöglicht, die auf die Beseitigung toxischer Emissionen wie Kohlenmonoxid, Kohlenwasserstoffe und andere flüchtige organische Stoffe und insbesondere Stickoxid-Spezies ausgerichtet sind.

Die "Light-Off-Temperatur" kennzeichnet hierbei die Temperatur, ab der 50 % mindestens einer der zu zersetzenden Verbindungen oder eine Gruppe der zu zersetzenden Verbindungen konvertiert wird. Unterhalb dieser Mindesttemperatur ist die katalytische Wirkung für die katalytische Oxidationsreaktion zu gering, um eine ausreichende Effektivität zu gewährleisten. Außerdem bestand die Aufgabe in der Bereitstellung eines Verfahrens zur Herstellung einer solchen katalytisch wirksamen Zusammensetzung, einer Zubereitung enthaltend die katalytisch wirksame Zusammensetzung sowie deren Herstellung, sowie eines Katalysators, der die katalytisch wirksame Zusammensetzung enthält.

Überraschenderweise hat sich gezeigt, dass die der vorliegenden Erfindung zugrunde liegende Aufgabe gelöst wird durch eine katalytisch wirksame Zusammensetzung, die ein mindestens mit Ruthenium ausgestattetes dotiertes refraktäres Oxid ausgewählt aus der Gruppe bestehend aus Aluminiumoxid, Magnesiumoxid, Siliziumoxid, Molybdänoxid, Wolframoxid, Titanoxid, deren Mischungen und Verbundoxiden von zwei oder mehr hiervon und ein Cer-Zirkonium-Oxid, das mindestens ein von Cer verschiedenes Element aus der Gruppe der seltenen Erden umfasst, enthält.

Insbesondere hat sich herausgestellt, dass die Kombination eines dotierten refraktären Oxids, auf dem mindestens Ruthenium als katalytisch aktive Komponente geträgert ist, mit einem dotierten Cer-Zirkonium-Oxid eine unerwartete Stabilisierung des Rutheniums in der katalytisch wirksamen Zusammensetzung zur Folge hat. Außerdem weist die Zusammensetzung eine unerwartet hohe katalytische Aktivität auf, was besonders niedrige Beladungen mit der katalytisch wirksamen Spezies ermöglicht. Die spezifische Kombination der verschiedenen Komponenten ermöglicht somit, eine vergleichsweise günstige und dennoch aktive und stabile katalytisch wirksame Zusammensetzung bereitzustellen.

Die erfindungsgemäße katalytisch wirksame Zusammensetzung ist zur Verwendung in der Abgasnachbehandlung, insbesondere von sauerstoffhaltigen Verbrennungsabgasen, geeignet. Beispiele für Verbrennungsabgase umfassen Abgase von beweglichen und stationären Verbrennungsmotoren, die neben Kohlenwasserstoffen und Kohlenstoffmonoxid, die in der Nachbehandlung oxidiert werden, auch Stickoxide enthalten, die aus dem Abgas reduziert werden. Weitere mögliche Quellen für behandelbare Abgase sind Verbrennungsanlagen, Gasturbinen oder Industrieanlagen wie Raffinerien, chemische Anlagen, Kläranlagen oder Müllverbrennungsanlagen. Besonders bevorzugt ist der Einsatz zur Behandlung von Abgasen aus Verbrennungsmotoren, insbesondere Kleinmotoren, 2-Taktmororen und Motoren, die im "fetten" Lambda-Bereich betrieben werden. Als Lambda (λ) bezeichnet man dabei das Verbrennungsluftverhältnis. Dieses setzt die tatsächlich für eine Verbrennung zur Verfügung stehende Luftmasse ins Verhältnis zur mindestens notwendigen stöchiometrischen Luftmasse, die für eine vollständige Verbrennung des Kraftstoffs benötigt wird. Beim stöchiometrischen Kraftstoffverhältnis ist genau die Luftmenge vorhanden um den Kraftstoff vollständig zu verbrennen. Dies wird als λ=1 bezeichnet. Ist mehr Kraftstoff vorhanden spricht man von fettem Gemisch (λ<1), bei Luftüberschuss von magerem Gemisch (λ>1).

Die katalytisch wirksame Zusammensetzung umfasst ein dotiertes refraktäres Oxid. Der hier verwendete Begriff "refraktäres Oxid" bezieht sich auf ein metallhaltiges Oxid, das bei hohen Temperaturen chemisch und physikalisch stabil ist, insbesondere bei den mit Benzin- und Dieselmotorabgasen verbundenen Temperaturen. Refraktäre Oxide werden häufig auch als hitzebeständige Oxide bezeichnet.

Das refraktäre Oxid ist ausgewählt aus der Gruppe bestehend aus Aluminiumoxid, Magnesiumoxid, Siliziumoxid, Molybdänoxid, Wolframoxid, Titanoxid, deren Mischoxiden und Verbundoxiden von zwei oder mehr hiervon.

Der Begriff "Mischoxid", wie hier verwendet, bezeichnet allgemein ein Gemisch von Oxiden in einer einzelnen Phase, wie es auf dem einschlägigen Fachgebiet üblicherweise bekannt ist. Er wird nicht für physikalische Mischungen von Oxiden verwendet, sondern bezeichnet "feste Lösungen" mit einem einheitlichen Kristallgitter, bei denen die einzelnen Metalloxide nicht mehr unterschieden werden können. Der Begriff "Verbundoxid" wie er hier verwendet wird, steht für Metalloxid-Agglomerate, die kein einheitliches Kristallgitter aufweisen und bei denen Phasen der einzelnen Metalloxide unterschieden werden können.

In bevorzugten Ausführungsformen ist das refraktäre Oxid Aluminiumoxid oder ein Mischoxid oder Verbundoxid von Aluminiumoxid.

Das refraktäre Oxid ist dotiert, mit anderen Worten umfasst das refraktäre Oxid ein Dotierungsmittel. Refraktäre Oxide, die mit einem Dotierungsmittel dotiert sind, sind unter Verwendung von auf dem einschlägigen Fachgebiet bekannten Verfahren erhältlich.

Geeignete Dotierungsmittel können ausgewählt sein aus der Gruppe bestehend aus Seltenerdmetallen, Übergangsmetallen, Erdalkalimetallen und deren Mischungen. Insbesondere kann das Dotierungsmittel mindestens ein Element ausgewählt sein aus der Gruppe bestehend aus Cer (Ce), Zirkonium (Zr), Titan (Ti), Silicium (Si), Mangan (Mn), Yttrium (Y), Lanthan (La), Barium (Ba), Praseodym (Pr), Gadolinium (Gd), Samarium (Sm), und Neodym (Nd). Bevorzugt umfasst das Dotierungsmittel La, Ba, Sr, Zr oder Mn. Das Dotierungsmittel liegt bevorzugt als Oxid vor.

Besonders bevorzugt ist das dotierte refraktäre Oxid ein mit Lanthanoxid dotiertes Aluminiumoxid, ein mit Lanthanoxid dotiertes Mischoxid von Aluminiumoxid oder ein mit Lanthanoxid dotiertes Verbundoxid von Aluminiumoxid.

Die Gesamtmenge des Dotiermittels kann 0,2 bis 6 Gew.-% (Gewichts-%), vorzugsweise 0,5 bis 5 Gew.-% des dotierten refraktären Oxids betragen, insbesondere bevorzugt 1 bis 4 Gew.-%. Die Gesamtmenge des Dotiermittels wie hierin verwendet bezieht sich auf das Gewicht des dotierten refraktären Oxids.

Es ist bevorzugt, dass das dotierte refraktäre Oxid eine große BET-Oberfläche aufweist, bevorzugt beträgt die BET-Oberfläche mindestens 30 m²/g, insbesondere mindestens 80 m²/g, besonders bevorzugt mindestens 100 m²/g. Typischerweise beträgt die BET-Oberfläche des dotierten refraktären Oxids zwischen 30 und 300 m²/g, bevorzugt zwischen 50 und 200 m²/g. Die BET-Oberfläche wird auch spezifische Oberfläche genannt und kann nach ISO 9277:2010 mit Stickstoff als Adsorbat bestimmt werden.

Der Anteil des dotierten refraktären Oxids in der katalytisch wirksamen Zusammensetzung kann im Bereich von 10 bis 95 Gew.-% liegen, bezogen auf die Gesamtmenge der katalytisch wirksamen Zusammensetzung, bevorzugt im Bereich von 20 bis 90 Gew.-%, insbesondere im Bereich von 30 bis 85 Gew.-%.

Bei dem dotierten refraktären Oxid handelt es sich bevorzugt um ein poröses Material. Das Porenvolumen liegt üblicherweise im Bereich von 0,2 bis 10,0 mL/g, insbesondere im Bereich von 0,3 bis 0,8 mL/g. Die durchschnittlichen Porenradien betragen 5 bis 40 nm, insbesondere 10 bis 30 nm. Die Bestimmung des Porenvolumens und der Porendurchmesserverteilung kann mittels Quecksilberporosimetrie gemäß ISO 15901-1:2022 erfolgen.

Bevorzugt weist das dotierte refraktäre Oxid eine Partikelgröße d₉₀ im Bereich von 10 µm bis 35 µm, bevorzugt im Bereich von 15 µm bis 30 µm, besonders bevorzugt im Bereich von 19 µm bis 24 µm. Der d₉₀-Wert gibt hierbei an, dass 90 % der Partikel einen Durchmesser haben, der unter diesem Wert liegt. Die Bestimmung der Partikelgrößenverteilung kann über Laserbeugung gemäß ISO 13320 erfolgen.

Das dotierte refraktäre Oxid ist mindestens mit Ruthenium ausgestattet. Das Ruthenium bildet mindestens einen Teil der katalytisch aktiven Komponente der katalytisch wirksamen Zusammensetzung.

Die verwendeten Bezeichnungen "Ruthenium" beinhalten hierbei keine Aussage über die Oxidationsstufe des Rutheniums. Mit anderen Worten wird damit nicht das Vorliegen des elementaren Zustands mit der Oxidationsstufe 0 bezeichnet. Das Ruthenium kann auf dem dotierten refraktären Oxid elementar, also in der Oxidationsstufe (0) oder in einer höheren Oxidationsstufe vorliegen. Der hierin verwendete dem Fachmann bekannte Begriff "Oxidationsstufe" bedeutet die formale Ladung eines Atoms innerhalb einer Verbindung bzw. die tatsächliche Ladung einatomiger Ionen. Atome im elementaren Zustand weisen per Definition die Oxidationsstufe 0 auf.

Unter einer Ausstattung des dotierten refraktären Oxids mit Ruthenium ist zu verstehen, dass Ruthenium auf dem dotierten refraktären Oxid geträgert ist, also dass das Ruthenium auf, in oder an dem dotierten refraktären Oxid vorliegt, beispielsweise in Form von Partikeln oder einer Schicht, wobei diese Schicht bevorzugt nicht-geschlossen vorliegt. Die Begriffe "ausgestattet" und "geträgert" werden im Rahmen dieser Anmeldung synonym und austauschbar verwendet. Die Ausstattung des dotierten refraktären Oxids kann dabei sowohl auf der Oberfläche als auch im Inneren des dotierten refraktären Oxids vorliegen. Der Begriff "Oberfläche" umfasst hierbei sowohl die äußere als auch die innere Oberfläche, mit anderen Worten ist auch die innenliegende durch Poren gebildete Oberfläche umfasst.

Typischerweise ist das dotierte refraktäre Oxid mit 0,1 Gew.-% bis 25 Gew.-% Ruthenium ausgestattet, bezogen auf die Gesamtmenge von dotiertem refraktären Oxid und Ruthenium, vorzugsweise mit 0,1 Gew.-% bis 20 Gew.-%, bevorzugter mit 0,5 Gew.-% bis 15 Gew.-%, besonders bevorzugt mit 1,0 Gew.-% bis 10 Gew.-%.

Bevorzugterweise umfasst die katalytisch wirksame Zusammensetzung Ruthenium in einer Menge von 0,05 bis 20 Gew.-%, bezogen auf die Gesamtmenge von dotiertem refraktären Oxid, Ruthenium, Cer-Zirkonium-Oxid und optional weiteren Edelmetallen, vorzugsweise 0,5 bis 18 Gew.-%, bevorzugter 1,0 bis 13 Gew.-%, beispielsweise 0,05 Gew.-%, 0,1 Gew.-%, 0,5 Gew.-%, 1 Gew.-%, 2 Gew.-%, 3 Gew.-%, 4 Gew.-%, 5 Gew.-%, 6 Gew.-%, 7 Gew.-%, 8 Gew.-%, 9 Gew.-%, 10 Gew.-%, 11 Gew.-%, 12 Gew.-%, 13 Gew.-%, 15 Gew.-%, 18 Gew.-%., 20 Gew.-% oder Zwischenstufen davon.

Die Ausstattung des dotierten refraktären Oxids mit Ruthenium kann nach dem Fachmann bekannten Methoden erfolgen, beispielsweise durch Imprägnierung, Ausfällung, Gasphasenabscheidung (*engl. chemical vapor deposition, CVD*)*,* Beschichtungsverfahren oder Sprühverfahren. Die Ausstattung kann in einem oder mehreren Schritten erfolgen.

Die Ausstattung umfasst dabei typischerweise das Zusammenbringen des dotierten refraktären Oxids mit mindestens einer Rutheniumverbindung, die meist in einer Zusammensetzung bereitgestellt wird, die mindestens ein Lösungsmittel umfasst. Im Anschluss an das Zusammenbringen kann die Ausfällung und/oder Reduzierung der mindestens einen Rutheniumverbindung sowie ein Trocknungs- und/oder Kalzinierungsschritt erfolgen.

Beispielsweise kann die Zusammensetzung durch Kapillarkräfte getrieben im oder in das dotierte refraktäre Oxid aufgesogen werden, sodass das Volumen der Zusammensetzung annähernd dem Porenvolumen des dotierten refraktären Oxids entspricht, dem Fachmann als *"incipient wetness method"* bekannt.

Ein "Lösungsmittel" bedeutet hierin, dass das Lösungsmittel mindestens eine flüssige Substanz umfasst, in welcher die mindestens eine Rutheniumverbindung löslich ist. Das mindestens eine Lösungsmittel kann mehrere chemische Substanzen enthalten, d. h. das Lösungsmittel kann auch ein Lösungsmittelgemisch sein.

Das mindestens eine Lösungsmittel kann ausgewählt sein aus der Gruppe bestehend aus Wasser und organischen Lösungsmitteln. Das organische Lösungsmittel kann aus einer Vielzahl üblicher organischer Lösemittel ausgewählt sein. Zweckmäßigerweise ist das organische Lösungsmittel unter den Verarbeitungsbedingungen der Zusammensetzung im Wesentlichen flüchtig. Organische Lösungsmittel können beispielsweise Alkohole, wie Methanol oder Ethanol, sein.

In einer bevorzugten Ausführungsform umfasst die Zusammensetzung das Lösungsmittel zu 20 bis 99,5 Gew.-%, bezogen auf das Gesamtgewicht der Zusammensetzung, bevorzugt zu 30 bis 95 Gew.-%. Vorteilhafterweise umfasst die Zusammensetzung das Lösungsmittel zu mindestens 50 Gew.-%, besonders bevorzugt zu mindestens 80 Gew.-%, ganz besonders bevorzugt zu mindestens 90 Gew.-%.

Die Zusammensetzung enthält außerdem mindestens eine Rutheniumverbindung.

Die Menge des Rutheniums in der Zusammensetzung kann in weiten Bereichen variieren und wird bestimmt durch die beabsichtige Beladung des dotierten refraktären Oxids mit Ruthenium. Die "Menge des Rutheniums" bezieht sich auf den Rutheniumanteil in der Zusammensetzung, mit anderen Worten wird damit nicht die Menge der gesamten Rutheniumverbindung bezeichnet. Bevorzugt umfasst die Zusammensetzung 0,5 bis 80 Gew.-% Ruthenium, bezogen auf das Gesamtgewicht der Zusammensetzung umfassend das mindestens eine Lösungsmittel und die Rutheniumverbindung. In einer Ausführungsform umfasst die Zusammensetzung 1 bis 60 Gew.-% Ruthenium, bevorzugt 5 bis 50 Gew.-%. Besonders gute Ergebnisse werden erhalten, wenn die Zusammensetzung Ruthenium in einer Menge von mindestens 0,5 Gew.-% enthält, insbesondere mindestens 1 Gew.-%, vorzugsweise mindestens 5 Gew.-%, bevorzugt mindestens 10 Gew.-%.

Die Zusammensetzung kann nur eine Rutheniumverbindung oder mehrere Rutheniumverbindungen enthalten. Geeignete Rutheniumverbindungen sind z.B. Ru-Salze, Ru-Komplexverbindungen oder Ru-Organometallverbindungen, beispielsweise Nitrate, Acetylacetonate oder Acetate, aber auch eine Vielzahl weiterer Salze, die dem Fachmann bekannt sind oder die er durch einfache Versuche auffinden kann. Bevorzugt handelt es sich bei der Rutheniumverbindung um eine halogenfreie Rutheniumverbindung. Beispiele für geeignete Rutheniumverbindungen umfassen Rutheniumnitrat, Rutheniumacetat, Rutheniumpentacarbonyl, Rutheniumacetylacetonat, Rutheniumoxalat, Ruthenocen und Rutheniumnitrosylnitrat.

Bevorzugt umfasst die Ausstattung des dotierten refraktären Oxids mit Ruthenium einen Trocknungsschritt, bei dem zumindest ein Teil des Lösungsmittels der Zusammensetzung entfernt wird.

Bevorzugt kann die Ausstattung des dotierten refraktären Oxids mit Ruthenium einen Kalzinierungsschritt umfassen. Unter "Kalzinierung" versteht der Fachmann eine thermische Behandlung, bei der bevorzugt die Fixierung einer metallischen Komponente auf einem Trägermaterial erfolgt. Insbesondere vorteilhaft ist der Kalzinierungsschritt, wenn die Temperatur im Bereich von 150 bis 700 °C liegt, insbesondere 200 bis 600 °C. In bevorzugten Ausführungsformen beträgt die Temperatur mehr als 200 °C, besonders bevorzugt mehr als 300 °C. In bevorzugten Ausführungsformen erfolgt der Kalzinierungsschritt über einen Zeitraum von 1 bis 24 h, bevorzugt über 2 bis 12 h.

Das dotierte refraktäre Oxid kann mit mindestens einem weiteren Edelmetall ausgestattet sein, das ausgewählt ist aus der Gruppe bestehend aus Platin (Pt), Palladium (Pd), Iridium (Ir), Rhodium (Rh) und deren Kombinationen. In solchen Fällen bilden das Ruthenium und das mindestens eine weitere Edelmetall mindestens einen Teil der katalytisch aktiven Komponente der katalytisch wirksamen Zusammensetzung. Die Kombination von Ruthenium mit mindestens einem weiteren Edelmetall hat sich als besonders vorteilhaft im Hinblick auf die Langzeitstabilität und die Light-Off-Temperatur der katalytisch wirksamen Zusammensetzung herausgestellt.

Die verwendeten Bezeichnungen "Metall", "Edelmetall" oder beispielsweise "Platin" beinhalten hierbei keine Aussage über deren Oxidationsstufe. Mit anderen Worten wird damit nicht das Vorliegen des elementaren Zustands mit der Oxidationsstufe 0 bezeichnet. Das Metall, Edelmetall oder beispielsweise Platin kann elementar, also in der Oxidationsstufe (0) oder in einer höheren Oxidationsstufe vorliegen.

Insbesondere hat es sich als vorteilhaft erwiesen, wenn das dotierte refraktäre Oxid mit einer Kombination aus Ruthenium und Iridium, Ruthenium und Platin, Ruthenium und Palladium, Ruthenium, Platin und Iridium, Ruthenium, Palladium und Iridium oder Ruthenium, Palladium und Platin ausgestattet ist. In besonders bevorzugten Ausführungsformen ist das dotierte refraktäre Oxid mit Ruthenium und Iridium oder Ruthenium, Platin und Iridium ausgestattet.

Bevorzugterweise ist das dotierte refraktäre Oxid in einer Menge von 0,2 bis 30 Gew.-% mit Ruthenium und dem mindestens eine weitere Edelmetall ausgestattet, bezogen auf die Gesamtmenge von dotiertem refraktären Oxid, Ruthenium und dem mindestens einen weiteren Edelmetall, vorzugsweise mit 0,5 bis 25 Gew.-%, bevorzugter mit 1 bis 20 Gew.-%, besonders bevorzugt mit 5 bis 15 Gew.-%.

Wenn das dotierte refraktäre Oxid mit mindestens einem weiteren Edelmetall ausgestattet ist, liegen Ruthenium und das mindestens eine weitere Edelmetall bevorzugt in einem molaren Verhältnis im Bereich von 1:20 bis 20:1 vor, insbesondere in einem Verhältnis von 1:10 bis 10:1.

Für den Fall, dass das dotierte refraktäre Oxid mit Ruthenium und mindestens einem weiteren Edelmetall ausgestattet werden soll, kann es bevorzugt sein, das dotierte refraktäre Oxid gleichzeitig mit dem Ruthenium und dem mindestens einen weiteren Edelmetall auszustatten. In diesem Fall kann die Zusammensetzung, die zur Ausstattung mit Ruthenium verwendet wird, mindestens eine weitere Edelmetallverbindung enthalten. Die Ausstattung erfolgt wie bereits für die Ausstattung mit Ruthenium beschrieben. Es kann ebenfalls vorteilhaft sein, wenn das mindestens eine weitere Edelmetall in einer separaten Zusammensetzung bereitgestellt wird, die gleichzeitig mit der die Rutheniumverbindung enthaltenden Zusammensetzung mit dem dotierten refraktären Oxid in Kontakt gebracht wird. Die Ausstattung des dotierten refraktären Oxids mit einem weiteren Edelmetall kann auch in einem separaten Schritt erfolgen, der nach oder vor der Ausstattung mit Ruthenium erfolgen kann.

Die Menge der mindestens einen weiteren Edelmetallverbindung in der Zusammensetzung kann in weiten Bereichen variieren und wird bestimmt durch die beabsichtige Beladung des dotierten refraktären Oxids mit dem mindestens einen weiteren Edelmetall. Die "Menge des mindestens einen weiteren Edelmetalls" bezieht sich auf den Anteil des mindestens einen weiteren Edelmetalls in der Zusammensetzung, mit anderen Worten wird damit nicht die Menge der mindestens einen Edelmetallverbindung bezeichnet. Bevorzugt umfasst die Zusammensetzung 0,5 bis 80 Gew.-% des mindestens einen weiteren Edelmetalls, bezogen auf das Gesamtgewicht der Zusammensetzung umfassend das mindestens eine Lösungsmittel und die mindestens eine Edelmetallverbindung. In einer Ausführungsform umfasst die Zusammensetzung 1 bis 60 Gew.-% des mindestens einen weiteren Edelmetalls, bevorzugt 5 bis 50 Gew.-%. Besonders gute Ergebnisse werden erhalten, wenn die Zusammensetzung das mindestens eine weitere Edelmetall in einer Menge von mindestens 0,5 Gew.-% enthält, insbesondere mindestens 1 Gew.-%, vorzugsweise mindestens 5 Gew.-%, bevorzugt mindestens 10 Gew.-%.

Die Zusammensetzung kann nur eine Edelmetallverbindung oder mehrere Edelmetallverbindungen enthalten. Geeignete Edelmetallverbindungen sind Komplexe, Organometallverbindungen oder Salze des Edelmetalls, beispielsweise Nitrate, Halogenide, Acetylacetonate oder Acetate, aber auch eine Vielzahl weiterer Salze, die dem Fachmann bekannt sind oder die er durch einfache Versuche auffinden kann.

Im Fall, dass das mindestens eine Edelmetall Iridium umfasst, kann es sich bei der mindestens einen Edelmetallverbindung beispielsweise um ein Ir-Salz, eine Ir-Komplexverbindung oder eine Ir-Organometallverbindung handeln. Beispiel für geeignete Iridumverbindungen sind Iridiumchlorid, Iridiumacetat, Iridiumacetylacetonat, Iridiumsulfat, und Dihydrogenhexachloroiridat.

Im Fall, dass das mindestens eine Edelmetall Platin umfasst, kann es sich bei der mindestens einen Edelmetallverbindung beispielsweise um ein Pt-Salz, eine Pt-Komplexverbindung oder eine Pt-Organometallverbindung handeln. Als Beispiele für geeignete Platinverbindungen können ein Platinhalogenid, wie Platin(II)chlorid oder Platin(IV)chlorid oder eine Säure davon, Hexachloroplatinsäure oder ein Salz dieser Säure, Platinsäure oder ein Salz dieser Säure, Hydroxyethylammoniumhexahydroxoplatinat, Ammoniumhexachloroplatinat, Ammoniumtetrachloroplatinat, Kaliumtetrachloroplatinat, Kaliumhexachloroplatinat, Natriumtetrachloroplatinat, Kaliumtetrahydroxyplatinat, Platinnitrat, Platinsulfit, Platinethanolamin, Platinacetylacetonat, Platinoxalat oder eine Mischung aus mindestens zwei dieser Verbindungen genannt werden.

Im Fall, dass das mindestens eine Edelmetall Palladium umfasst, kann es sich bei der mindestens einen Edelmetallverbindung beispielsweise um ein Pd-Salz, eine Pd-Komplexverbindung oder eine Pd-Organometallverbindung handeln. Als beispielhafte Palladiumverbindungen können ein Palladiumhalogenid, wie Palladium(II)chlorid, Palladium(II)bromid oder Palladium(IV)chlorid oder eine Säure davon, Palladiumacetat, Palladiumnnitrat, Palladiumacetylacetonat, Palladiumsulfat, Palladiumoxalat, Hydroxyethylammoniumhexahydroxopalladat, Ammoniumhexachloropalladat, Ammoniumtetrachloropalladat, Kaliumtetrachloropalladat, Kaliumhexachloropalladat, Natriumtetrachloropalladat, Kaliumtetrahydroxypalladat, Diammindichloropalladium, Tetraaminpalladiumnitrat, Tetraaminpalladiumchlorid, Tetraaminpalladiumhydroxid, Tetraaminpalladiumsulfat oder eine Mischung aus mindestens zwei dieser Verbindungen genannt werden.

Damit der Sauerstoff aus den Stickoxiden des zu behandelnden Abgases entfernt werden kann und gleichzeitig Kohlenwasserstoffe und Kohlenstoffmonoxid oxidiert werden können, umfasst die katalytisch wirksame Zusammensetzung ein Cer-Zirkonium-Oxid das mindestens ein von Cer verschiedenes Element aus der Gruppe der seltenen Erden umfasst. Solche Cer-Zirkonium-Oxide sind dem Fachmann als Sauerstoffspeicherkomponenten bekannt. Bei dem Cer-Zirkonium-Oxid kann es sich um Mischoxide oder um Mischungen von Ceroxid (CeO₂) und Zirkoniumoxid (ZrO₂) handeln. Erfindungsgemäß umfasst das Cer-Zirkonium-Oxid sowohl Cerreiche Oxide als auch Zirkonium-reiche Oxide.

Das Cer-Zirkonium-Oxid enthält bevorzugt zu 10 bis 90 Gew.-% Zirkonoxid, bevorzugt zu 15 bis 80 Gew.-% bezogen auf das Gesamtgewicht des Cer-Zirkonium-Oxids.

Das Cer-Zirkonium-Oxid umfasst mindestens ein von Cer verschiedenes Element aus der Gruppe der seltenen Erden. Das mindestens eine Element aus der Gruppe der seltenen Erden liegt bevorzugt als Oxid vor. Bevorzugt ist das mindestens eine Element der seltenen Erden ausgewählt aus der Gruppe bestehend aus Neodym (Nd), Praseodym (Pr), Lanthan (La) und Hafnium (Hf). Das Cer-Zirkonium-Oxid kann beispielsweise ein Cer-Zirkonium-Lanthanoxid, ein Cer-Zirkonium-Yttriumoxid, ein Cer-Zirkonium-Lanthan-Yttriumoxid, ein Cer-Zirkonium-Neodymoxid, ein Cer-Zirkonium-Praseodymoxid, ein Cer-Zirkonium-Lanthan-Neodymoxid, ein Cer-Zirkonium-Lanthan-Praseodymoxid, ein Cer-Zirkonium-Lanthan-Neodym-Praseodymoxid oder eine Kombination davon umfassen. Dabei kann der Anteil der jeweiligen Seltenerdoxide 2 Gew.-% bis 20 Gew.-%, bevorzugt 5 Gew.-% bis 15 Gew.-% bezogen auf das Gesamtgewicht der Sauerstoffspeicherkomponente betragen.

Bevorzugt umfasst die katalytisch wirksame Zusammensetzung das Cer-Zirkonium-Oxid zu einem Anteil von 5 bis 50 Gew.-%, besonders bevorzugt zu einem Anteil von 10 bis 40 Gew.-% bezogen auf das Gesamtgewicht der katalytisch wirksamen Zusammensetzung.

Es ist bevorzugt, dass das Cer-Zirkonium-Oxid eine BET-Oberfläche von mindestens 10 m²/g, insbesondere mindestens 20 m²/g aufweist. Typischerweise beträgt die BET-Oberfläche des Cer-Zirkonium-Oxids zwischen 10 und 150 m²/g, bevorzugt zwischen 30 und 100 m²/g.

Bei dem Cer-Zirkonium-Oxid handelt es sich bevorzugt um ein poröses Material. Das Porenvolumen liegt üblicherweise im Bereich von 0,2 bis 1,0 mL/g, insbesondere im Bereich von 0,3 bis 0,8 mL/g. Die durchschnittlichen Porenradien betragen etwa 5 bis 20 nm, insbesondere 7 bis 12 nm.

Bevorzugt weist das Cer-Zirkonium-Oxid eine Partikelgröße d₉₀ im Bereich von 10 µm bis 35 µm, bevorzugt im Bereich von 15 µm bis 30 µm, besonders bevorzugt im Bereich von 19 µm bis 24 µm.

Das Cer-Zirkonium-Oxid kann mit mindestens einem Edelmetall ausgestattet sein, das bevorzugt aus der Gruppe ausgewählt ist bestehend aus Ruthenium (Ru), Platin (Pt), Palladium (Pd), Iridium (Ir), Rhodium (Rh) und deren Kombinationen. Um Missverständnissen vorzubeugen sei an dieser Stelle darauf hingewiesen, dass Ruthenium also ebenfalls zu der Gruppe der Edelmetalle zu zählen ist. In solchen Fällen bildet das Ruthenium und optional weitere Edelmetalle, mit dem das dotierte refraktäre Oxid ausgestattet ist, und das oder die Edelmetalle, mit denen das Cer-Zirkonium-Oxid ausgestattet ist, die katalytisch aktive Komponente der katalytisch wirksamen Zusammensetzung.

Insbesondere ist die Ausstattung des Cer-Zirkonium-Oxids mit mindestens einem Edelmetall von Vorteil, wenn der Gesamtanteil der Edelmetalle in der katalytisch wirksamen Zusammensetzung größer als 5 Gew.-% ist, insbesondere größer als 10 Gew.-%. Unter dem Gesamtanteil der Edelmetalle sind alle in der katalytisch wirksamen Zusammensetzung vorliegenden Edelmetalle zu verstehen, mit anderen Worten sowohl das Ruthenium und eventuell weitere Edelmetalle mit denen das dotierte refraktäre Oxid ausgestattet ist, als auch Edelmetalle, mit denen das Cer-Zirkonium-Oxid ausgestattet ist.

Die Menge des mindestens einen Edelmetalls, mit dem das Cer-Zirkonium-Oxid ausgestattet ist, beträgt bevorzugt 0,05 Gew.-% bis 15 Gew.-% bezogen auf die Gesamtmenge von Cer-Zirkonium-Oxid und dem mindestens einem Edelmetall, insbesondere 0,1 Gew.-% bis 10 Gew.-%, ganz besonders 0,5 Gew.-% bis 5 Gew.-%.

Insbesondere hat es sich als vorteilhaft erwiesen, wenn das Cer-Zirkonium-Oxid mit Ruthenium, Ruthenium und Iridium, Ruthenium und Platin, Ruthenium und Palladium oder Ruthenium, Iridium und Platin ausgestattet ist.

Die Ausstattung des Cer-Zirkonium-Oxids mit mindestens einem Edelmetall kann wie die Ausstattung des dotierten refraktären Oxids nach dem Fachmann bekannten Methoden erfolgen, beispielsweise durch Imprägnierung, Ausfällung, Gasphasenabscheidung (*engl. chemical vapor deposition, CVD*) oder Sprühverfahren. Die oben gemachten Ausführungen zur Ausstattung des dotierten refraktären Oxids gelten ebenso für die Ausstattung des Cer-Zirkonium-Oxids.

Die Edelmetallausstattung des Cer-Zirkonium-Oxids kann gleich oder verschieden zur Edelmetallausstattung des dotierten refraktären Oxids sein. In bevorzugten Ausführungsformen sind die Edelmetallausstattungen des dotierten refraktären Oxids und des Cer-Zirkonium-Oxids verschieden. Mit anderen Worten unterscheiden sich die katalytisch aktiven Komponenten, die auf dem dotierten refraktären Oxid und dem Cer-Zirkon-Oxid geträgert sind. Beispielsweise kann das Edelmetall oder die Edelmetalle, die Kombination der Edelmetalle, die Beladung mit Edelmetall oder Edelmetallen, die Form oder Größe der Edelmetall-Partikel unterschiedlich sein, mit dem das dotierte refraktäre Oxid und das Cer-Zirkonium-Oxid ausgestattet sind. Es sei an dieser Stelle darauf hingewiesen, dass sich die Ausstattung des dotierten refraktären Oxids und des Cer-Zirkonium-Oxids auch in solchen Fällen unterscheidet, in denen das Cer-Zirkonium-Oxid mit keiner katalytisch aktiven Komponente ausgestattet ist. Eine unterschiedliche Ausstattung des dotierten refraktären Oxids und des Cer-Zirkonium-Oxids ermöglicht eine gezielte Kombination von Edelmetall und Trägermaterial zur Erreichung einer maximalen Effizienz der verschiedenen Spezies und eine Separierung verschiedener Edelmetallspezies voneinander. Dadurch kann eine weitere Erhöhung der katalytischen Aktivität erreicht werden. Insbesondere in Fällen, in denen die katalytisch wirksame Zusammensetzung neben Ruthenium mindestens ein weiteres Edelmetall enthält, kann eine unterschiedliche Ausstattung von Vorteil sein.

Beispielsweise kann
- das dotierte refraktäre Oxid mit Ruthenium und das Cer-Zirkonium-Oxid mit keinem Edelmetall ausgestattet sein,
- das dotierte refraktäre Oxid mit Ruthenium und das Cer-Zirkonium-Oxid mit Ruthenium ausgestattet sein,
- das dotierte refraktäre Oxid mit Ruthenium und das Cer-Zirkonium-Oxid mit Platin ausgestattet sein,
- das dotierte refraktäre Oxid mit Ruthenium und das Cer-Zirkonium-Oxid mit Iridium ausgestattet sein,
- das dotierte refraktäre Oxid mit Ruthenium und das Cer-Zirkonium-Oxid mit Ruthenium und Platin ausgestattet sein,
- das dotierte refraktäre Oxid mit Ruthenium und das Cer-Zirkonium-Oxid mit Ruthenium und Iridium ausgestattet sein,
- das dotierte refraktäre Oxid mit Ruthenium und das Cer-Zirkonium-Oxid mit Platin und Iridium ausgestattet sein,
- das dotierte refraktäre Oxid mit Ruthenium und das Cer-Zirkonium-Oxid mit Ruthenium, Platin und Iridium ausgestattet sein,
- das dotierte refraktäre Oxid mit Ruthenium und Platin und das Cer-Zirkonium-Oxid mit keinem Edelmetall ausgestattet sein,
- das dotierte refraktäre Oxid mit Ruthenium und Platin und das Cer-Zirkonium-Oxid mit Ruthenium ausgestattet sein,
- das dotierte refraktäre Oxid mit Ruthenium und Platin und das Cer-Zirkonium-Oxid mit Platin ausgestattet sein,
- das dotierte refraktäre Oxid mit Ruthenium und Platin und das Cer-Zirkonium-Oxid mit Iridium ausgestattet sein,
- das dotierte refraktäre Oxid mit Ruthenium und Platin und das Cer-Zirkonium-Oxid mit Ruthenium und Platin ausgestattet sein,
- das dotierte refraktäre Oxid mit Ruthenium und Platin und das Cer-Zirkonium-Oxid mit Ruthenium und Iridium ausgestattet sein,
- das dotierte refraktäre Oxid mit Ruthenium und Platin und das Cer-Zirkonium-Oxid mit Platin und Iridium ausgestattet sein,
- das dotierte refraktäre Oxid mit Ruthenium und Platin und das Cer-Zirkonium-Oxid mit Ruthenium, Platin und Iridium ausgestattet sein,
- das dotierte refraktäre Oxid mit Ruthenium und Iridium und das Cer-Zirkonium-Oxid mit keinem Edelmetall ausgestattet sein,
- das dotierte refraktäre Oxid mit Ruthenium und Iridium und das Cer-Zirkonium-Oxid mit Ruthenium ausgestattet sein,
- das dotierte refraktäre Oxid mit Ruthenium und Iridium und das Cer-Zirkonium-Oxid mit Platin ausgestattet sein,
- das dotierte refraktäre Oxid mit Ruthenium und Iridium und das Cer-Zirkonium-Oxid mit Iridium ausgestattet sein,
- das dotierte refraktäre Oxid mit Ruthenium und Iridium und das Cer-Zirkonium-Oxid mit Ruthenium und Platin ausgestattet sein,
- das dotierte refraktäre Oxid mit Ruthenium und Iridium und das Cer-Zirkonium-Oxid mit Ruthenium und Iridium ausgestattet sein,
- das dotierte refraktäre Oxid mit Ruthenium und Iridium und das Cer-Zirkonium-Oxid mit Platin und Iridium ausgestattet sein,
- das dotierte refraktäre Oxid mit Ruthenium und Iridium und das Cer-Zirkonium-Oxid mit Ruthenium, Platin und Iridium ausgestattet sein,
- das dotierte refraktäre Oxid mit Ruthenium, Platin und Iridium und das Cer-Zirkonium-Oxid mit keinem Edelmetall ausgestattet sein,
- das dotierte refraktäre Oxid mit Ruthenium, Platin und Iridium und das Cer-Zirkonium-Oxid mit Ruthenium ausgestattet sein,
- das dotierte refraktäre Oxid mit Ruthenium, Platin und Iridium und das Cer-Zirkonium-Oxid mit Platin ausgestattet sein,
- das dotierte refraktäre Oxid mit Ruthenium, Platin und Iridium und das Cer-Zirkonium-Oxid mit Iridium ausgestattet sein,
- das dotierte refraktäre Oxid mit Ruthenium, Platin und Iridium und das Cer-Zirkonium-Oxid mit Ruthenium und Platin ausgestattet sein,
- das dotierte refraktäre Oxid mit Ruthenium, Platin und Iridium und das Cer-Zirkonium-Oxid mit Ruthenium und Iridium ausgestattet sein,
- das dotierte refraktäre Oxid mit Ruthenium, Platin und Iridium und das Cer-Zirkonium-Oxid mit Platin und Iridium ausgestattet sein oder
- das dotierte refraktäre Oxid mit Ruthenium, Platin und Iridium und das Cer-Zirkonium-Oxid mit Ruthenium, Platin und Iridium ausgestattet sein

Außerdem hat es sich als vorteilhaft im Hinblick auf die Stabilität der katalytisch wirksamen Zusammensetzung gezeigt, wenn insbesondere Ruthenium hauptsächlich auf dem dotierten refraktären Oxid geträgert ist. In bevorzugten Ausführungsformen sind mindestens 60 % des insgesamt in der katalytisch wirksamen Zusammensetzung enthaltenen Rutheniums auf dem dotierten refraktären Oxid geträgert, besonders bevorzugt mehr als 75 %, ganz besonders bevorzugt mehr als 95 %.

Bevorzugterweise umfasst die katalytisch aktive Zusammensetzung Edelmetalle in einer Menge von 0,5 bis 35 Gew.-%, bezogen auf die Gesamtmenge von dotiertem refraktären Oxid, Ruthenium, Cer-Zirkonium-Oxid und optional weiteren Edelmetallen, vorzugsweise 1 bis 30 Gew.-%, bevorzugter 5 bis 25 Gew.-%, beispielsweise 1 Gew.-%, 2 Gew.-%, 3 Gew.-%, 4 Gew.-%, 5 Gew.-%, 6 Gew.-%, 7 Gew.-%, 8 Gew.-%, 9 Gew.-%, 10 Gew.-%, 15 Gew.-%, 20 Gew.-%, 25 Gew.-%, 30 Gew.-%, 35 Gew.-% oder Zwischenstufen davon.

Die katalytisch wirksame Zusammensetzung kann auch weitere Komponenten enthalten, beispielsweise Füllstoffe, Bindemittel, Porenbilder, Stabilisatoren oder Rheologiemodifikatoren. Solche zusätzlichen Komponenten weisen typischerweise keine katalytische Aktivität für die gewünschte Reaktion auf, sondern verbessern stattdessen die Effektivität der katalytisch wirksamen Zusammensetzung, beispielsweise durch eine Vergrößerung des Betriebstemperaturbereichs, eine Vergrößerung der Kontaktoberfläche, eine Verbesserung der Haft-Eigenschaften der katalytisch wirksamen Zusammensetzung auf einem Substrat oder ähnliches.

Bevorzugt wird die katalytisch wirksame Zusammensetzung über ein Verfahren hergestellt, das die folgenden Schritte umfasst:
i) Bereitstellen des mindestens mit Ruthenium ausgestatten dotierten refraktären Oxids ausgewählt aus der Gruppe bestehend aus Aluminiumoxid, Magnesiumoxid, Siliziumoxid, Molybdänoxid, Wolframoxid, Titanoxid, deren Mischungen und Verbundoxiden von zwei oder mehr hiervon,
ii) Bereitstellen des Cer-Zirkonium-Oxids das mindestens ein von Cer verschiedenes Element aus der Gruppe der seltenen Erden umfasst,
iii) Mischen des mindestens mit Ruthenium ausgestatten dotierten refraktären Oxids und des Cer-Zirkonium-Oxids.

Die Erfindung betrifft außerdem ein Verfahren zur Herstellung einer erfindungsgemäßen katalytisch wirksamen Zusammensetzung, umfassend die oben genannten Schritte. Für bevorzugte Ausführungsformen der einzelnen Komponenten sei auf die oben gemachten Ausführungen verwiesen.

Es hat sich als überraschend gezeigt, dass die Ausstattung des dotierten refraktären Oxids mit Ruthenium vor der Herstellung der katalytisch wirksamen Zusammensetzung die Langzeitstabilität der katalytischen Wirksamkeit der Zusammensetzung verbessert. Außerdem wurden überraschenderweise positive Effekte auf die Light-Off-Temperatur einer erfindungsgemäß hergestellten katalytisch wirksamen Zusammensetzung beobachtet.

Insbesondere die Ausstattung des dotierten refraktären Oxids in einem Verfahren, bei dem eine halogenfreie Rutheniumverbindung eingesetzt wird hat sich als vorteilhaft im Hinblick auf die Langzeitstabilität und Effizienz der katalytisch wirksamen Zusammensetzung herausgestellt. Für Beispiele für geeignete Rutheniumverbindungen sei auf die oben gemachten Ausführungen verwiesen.

In Schritt iii) werden das mindestens mit Ruthenium ausgestatten dotierte refraktäre Oxid und das Cer-Zirkonium-Oxid gemischt. Das Vermischen erfolgt nach dem Fachmann bekannten Verfahren oder in dem Fachmann bekannten Anlagen mit dem Ziel einer möglichst homogenen Vermischung der Komponenten. Beispielsweise erfolgt das Vermischen in einem Schnecken-, Band-, Paddel-, Schaufel-, Rotor-, Trommel-, Doppelkonus- oder V-Mischer.

Die Erfindung betrifft außerdem eine Zubereitung, enthaltend
a) eine erfindungsgemäße katalytisch wirksame Zusammensetzung und
b) eine Flüssigkeit, bevorzugt Wasser.

Bevorzugt liegt die Zubereitung als Suspension vor. Eine Suspension im Sinne der vorliegenden Erfindung ist eine Mischung aus einem Feststoff und einer Flüssigkeit, wobei der Feststoff in Form von fein verteilten Festkörpern in der Flüssigkeit gleichmäßig verteilt vorliegt.

Solche Zubereitungen werden auch als "Washcoat-Suspension" bezeichnet". Der Begriff "Washcoat" ist dem Fachmann bekannt. Zu unterscheiden ist zwischen einer Washcoat-Suspension und einer damit auf einen makroskopischen Träger applizierbaren bzw. applizierten Washcoat-Schicht.

An dieser Stelle sei betont, dass die erfindungsgemäße Zubereitung bereits mindestens eine katalytisch aktive Spezies, nämlich mindestens das auf dem dotierten refraktären Oxid aufgebrachte Ruthenium, enthält. Dadurch unterscheidet sich die erfindungsgemäße Zubereitung von aus dem Stand bekannten Zubereitungen, die Vorläuferverbindungen einer katalytisch aktiven Spezies enthalten.

Die Zubereitung kann auch weitere Komponenten wie Säuren oder Basen zur pH-Wert-Regulierung, Binder, Haftvermittler oder Stabilisatoren enthalten. Bevorzugt enthält die Zubereitung zwischen 10 und 70 Gew.-% feste Bestandteile, insbesondere bevorzugt zwischen 30 und 50 Gew.-%, bezogen auf die Gesamtmasse von festen Bestandteilen und der Flüssigkeit.

Die erfindungsgemäße Zubereitung, kann bevorzugt hergestellt werden über ein Verfahren, das die folgenden Schritte umfasst
i) Bereitstellen des mindestens mit Ruthenium ausgestatten dotierten refraktären Oxids ausgewählt aus der Gruppe bestehend aus Aluminiumoxid, Magnesiumoxid, Siliziumoxid, Molybdänoxid, Wolframoxid, Titanoxid, deren Mischungen und Verbundoxiden von zwei oder mehr hiervon,
ii) Bereitstellen des Cer-Zirkonium-Oxids das mindestens ein von Cer verschiedenes Element aus der Gruppe der seltenen Erden umfasst,
iii) Bereitstellen einer Flüssigkeit, bevorzugt Wasser,
iv) Mischen des mindestens mit Ruthenium ausgestatten dotierten refraktären Oxids, des Cer-Zirkonium-Oxids und der Flüssigkeit.

Dabei kann das Vermischen der einzelnen Komponenten mit der Flüssigkeit auch getrennt voneinander erfolgen, mit anderen Worten können jeweils das mit Ruthenium ausgestatte dotierte refraktäre Oxid und das Cer-Zirkonium-Oxid jeweils separat mit der Flüssigkeit vermischt werden und diese Mischungen anschließend vermischt werden. In weiteren Ausführungsformen kann auch zunächst eine der beiden Komponenten mit der Flüssigkeit vermischt werden und anschließend die andere Komponente zu der erhaltenen Mischung zugegeben werden. Es kann auch bevorzugt sein, zunächst die beiden Oxide miteinander zu vermischen und diese Mischung anschließend mit der Flüssigkeit zu vermischen.

Optional kann das Verfahren zur Herstellung der Zubereitung auch weitere Schritte umfassen.

Beispielsweise kann das Verfahren einen Schritt zur pH-Wert Einstellung oder einen Mahlschritt umfassen. Der Mahlschritt kann das Mahlen des mit mindestens mit Ruthenium ausgestatteten dotierten refraktären Oxids und/oder des Cer-Zirkonium-Oxids umfassen. Das Mahlen kann vor oder nach dem Mischen des mit mindestens mit Ruthenium ausgestatteten dotierten refraktären Oxids mit dem Cer-Zirkonium-Oxid mit der Flüssigkeit erfolgen.

Die vorliegende Erfindung betrifft ebenso ein Verfahren zur Herstellung einer erfindungsgemäßen Zubereitung.

Typischerweise liegt die katalytisch wirksame Zusammensetzung als katalytisch wirksame Beschichtung vor. Wie dem Fachmann bekannt, liegt die katalytisch wirksame Zusammensetzung in solchen Fällen auf einem makroskopischen Träger vor, typischerweise auf einem hitzebeständigen Träger. Der Begriff "makroskopischer Träger" ist in diesem Zusammenhang als abgrenzend von dem oder den "mikroskopischen Trägern" zu verstehen, auf denen die katalytisch aktive Komponente oder die katalytisch aktiven Komponenten geträgert sind. Im Fall der vorliegenden Erfindung umfasst der mikroskopische Träger also das dotierte refraktäre Oxid und das Cer-Zirkonium-Oxid.

Die Erfindung betrifft außerdem eine katalytisch wirksame Beschichtung, umfassend
a) ein mindestens mit Ruthenium ausgestattetes dotiertes refraktäres Oxid ausgewählt aus der Gruppe bestehend aus Aluminiumoxid, Magnesiumoxid, Siliziumoxid, Molybdänoxid, Wolframoxid, Titanoxid, deren Mischungen und Verbundoxiden von zwei oder mehr hiervon und
b) ein Cer-Zirkonium-Oxid, das mindestens ein von Cer verschiedenes Element aus der Gruppe der seltenen Erden umfasst.

Für bevorzugte Ausführungen der katalytisch wirksamen Beschichtung sei auf die oben gemachten Ausführungen zur katalytisch wirksamen Zusammensetzung verwiesen, die ebenfalls für die erfindungsgemäße katalytisch wirksame Beschichtung gelten.

Im Prinzip kann der hitzebeständige Träger eine beliebige Form oder Größe aufweisen. Im Allgemeinen weist der hitzebeständige Träger eine Vielzahl von nebeneinander angeordneten Kanälen oder eine offenporigen Schaumstruktur mit miteinander verbundenen Hohlräumen auf, durch die Gase hindurch strömen können. Die Form und Größe des hitzebeständigen Trägers wird üblicherweise so gewählt, dass die Einwirkung der katalytisch wirksamen Zusammensetzung, bzw. der katalytisch wirksamen Beschichtung, im Katalysator auf das Abgas optimiert wird. Beispiele für geeignete Formen des hitzebeständigen Trägers umfassen Schüttgüter, monolithische Waben oder Wabenkörper, schichtförmige Faserkörper oder Gewirke, Schäume, Netze, Gestricke, poröse Körper oder Partikel. Im Fall von Schüttgutkatalysatoren liegt der hitzebeständige Träger bevorzugt als Formkörper (wie z.B. Granulat, Presslinge oder Extrudate wie Zylinder, Ringe, Kugeln, Quader, Plättchen) vor. Die Durchmesser oder die Größe solcher Schüttgutformkörper können beispielsweise im Bereich von etwa 1 bis 20 mm liegen.

Der hitzebeständige Träger umfasst typischerweise ein keramisches Material oder ein metallisches Material. Bevorzugt kann der hitzebeständige Träger Cordierit (SiO₂-Al₂O₃-MgO), Siliciumcarbid (SiC), Titan, eine Eisenlegierung wie z.B. eine Fe-Cr-AI-Legierung oder eine Ni-Cr-AI-Legierung oder einer Legierung eines nicht rostenden Stahls umfassen.

Verfahren zur Herstellung von katalytisch wirksamen Beschichtungen sind dem Fachmann bekannt. Beispielsweise kann die Herstellung durch Aufbringen von erfindungsgemäßen Zubereitungen auf einen geeigneten hitzebeständigen Träger erfolgen. Das Aufbringen kann dabei das Aufsprühen der Zubereitung oder das Eintauchen des hitzebeständigen Trägers in eine Washcoat-Suspension umfassen.

Beispielsweise umfasst ein solches Verfahren die Schritte
i) Bereitstellen einer Zubereitung, enthaltend
   a) eine erfindungsgemäße katalytisch wirksame Zusammensetzung und
   b) eine Flüssigkeit, bevorzugt Wasser,
ii) Bereitstellen eines hitzebeständigen Trägers,
iii) Aufbringen der Zubereitung auf den hitzebeständigen Träger.

Die vorliegende Erfindung betrifft auch ein Verfahren, das die oben genannten Schritte umfasst. In einem solchen Verfahren wird also ein beschichteter hitzebeständiger Träger erhalten.

Falls das Verfahren nur die Schritte i), ii) und iii) umfasst, wird eine Flüssigkeit-enthaltenden katalytisch wirksame Beschichtung erhalten, mit anderen Worten kann die katalytisch wirksame Beschichtung als "nasse Washcoat-Schicht" vorliegen.

Die Zubereitung kann in einem oder mehreren Schritten auf den hitzebeständigen Träger aufgebracht werden.

Das Verfahren zur Herstellung der katalytisch wirksamen Beschichtung kann auch weitere Schritte umfassen.

Bevorzugt kann der beschichtete hitzebeständige Träger in einem weiteren Schritt getrocknet und/oder kalziniert werden. In solchen Fällen wird die katalytisch wirksame Beschichtung als getrocknete oder kalzinierte Waschoat-Schicht erhalten.

Der Trocknungsschritt erfolgt bevorzugt bei einer Temperatur im Bereich von 50 bis 200 °C, besonders bevorzugt zwischen 80 und 150 °C. In bevorzugten Ausführungsformen erfolgt der Trocknungsschritt über einen Zeitraum von 0,5 bis 10 h, bevorzugt über 2 bis 8 h.

Insbesondere vorteilhaft ist der Kalzinierungsschritt, wenn die Temperatur im Bereich von 100 bis 700 °C liegt, insbesondere 150 bis 500 °C. In bevorzugten Ausführungsformen beträgt die Temperatur mehr als 200 °C, besonders bevorzugt mehr als 300 °C. In bevorzugten Ausführungsformen erfolgt der Kalzinierungsschritt über einen Zeitraum von 1 bis 12 h, bevorzugt über 2 bis 10 h.

Die Menge der auf den hitzebeständigen Träger aufgebrachten Zubereitung kann auf der Grundlage der gewünschten Beladung des makroskopischen Trägers mit der katalytisch aktiven Komponente bestimmt werden. Die Beladung des hitzebeständigen Trägers kann, wie dem Fachmann bekannt, beispielsweise durch die rheologischen Eigenschaften der Zubereitung gesteuert werden.

Darüber hinaus können die Verfahrensschritte des Aufbringens und des optionalen Trocknens und/oder Kalzinierens zur Herstellung der Washcoat-Schicht nach Bedarf wiederholt werden, um den gewünschten Beladungsgrad oder die gewünschte Dicke zu erreichen.

Die vorliegende Erfindung betrifft außerdem einen Katalysator umfassend die erfindungsgemäße katalytisch wirksame Zusammensetzung bzw. die katalytisch wirksame Beschichtung und einen hitzebeständigen Träger.

Der Katalysator kann beispielsweise als mit einer Washcoat-Schicht beschichteter Monolithkatalysator, als mit einer Washcoat-Schicht beschichteter Schüttgutformkörper oder als mit einer Washcoat-Schicht beschichteter Metallwaben- oder Metallgestrickkatalysator vorliegen. Die Washcoat-Schicht umfasst in solchen Fällen die katalytisch wirksame Zusammensetzung bzw. die katalytisch wirksame Beschichtung.

Verfahren zur Herstellung von Katalysatoren mit katalytisch wirksamen Beschichtungen sind dem Fachmann prinzipiell bekannt. Beispielsweise kann ein solches Verfahren die folgenden Schritte umfassen:
i) Bereitstellen einer Zubereitung, enthaltend
   a) eine erfindungsgemäße katalytisch wirksame Zusammensetzung und
   b) eine Flüssigkeit, bevorzugt Wasser,
ii) Bereitstellen eines hitzebeständigen Trägers,
iii) Aufbringen der Zubereitung auf den hitzebeständigen Träger,
iv) Trocknen und/oder Kalzinieren des beschichteten hitzebeständigen Trägers.

Für bevorzugte Ausführungen sei auf die oben gemachten Ausführungen zur Herstellung der katalytisch wirksamen Beschichtung verwiesen, die ebenfalls für die Herstellung von erfindungsgemäßen Katalysatoren gelten.

Nach dem Trocknen und/oder Kalzinieren wird die katalytisch wirksame Beschichtung als im Wesentlichen lösungsmittelfrei angesehen. Die erhaltene Beladung des hitzebeständigen Trägers kann dementsprechend durch Bestimmung der Differenz zwischen dem Gewicht des beschichteten und des unbeschichteten hitzebeständigen Trägers bestimmt werden.

Die Beladung des Katalysators mit der katalytisch wirksamen Zusammensetzung bzw. der katalytisch wirksamen Bechichtung wird so gewählt, dass die Vorrichtung insgesamt möglichst effizient genutzt wird. Die Beladung mit der katalytisch wirksamen Zusammensetzung liegt bevorzugt im Bereich von 30 bis 250 g/L, besonders bevorzugt im Bereich von 50 bis 200 g/L, insbesondere bevorzugt im Bereich von 75 bis 150 g/L. Die Beladung gibt die Menge der aufgetragenen Beschichtung bezogen auf das Leervolumen des hitzebeständigen Trägers an.

Durch die Verwendung der erfindungsgemäßen katalytisch wirksamen Zusammensetzung oder der erfindungsgemäßen katalytisch wirksamen Beschichtung sind Katalysatoren mit besonders niedrigen Gesamtbeladungen von Ruthenium möglich, beispielsweise im Bereich von 0,1 bis 15 g/L, bevorzugter 0,5 bis 12 g/L, besonders bevorzugt 1 bis 10 g/L.

Im Fall von katalytisch wirksamen Zusammensetzungen, die neben Ruthenium noch weitere Edelmetalle enthalten, liegt die Gesamtbeladung bevorzugt in einem Bereich von 1 bis 30 g/L, bevorzugter 1,5 bis 25 g/L, besonders bevorzugt 3 bis 20 g/L.

Ein erfindungsgemäße Katalysator kann beispielsweise in Kleinmotoren, in Motorrädern, der Automobilindustrie, in Nutzfahrzeugen, für Industrie- und Spezialanwendungen und bei Marineapplikationen verwendet werden.

Die vorliegende Erfindung betrifft außerdem ein Verfahren zur Abgasnachbehandlung, wobei ein Abgasstrom mit einer erfindungsgemäßen katalytisch wirksamen Zusammensetzung, einer erfindungsgemäßen katalytisch wirksamen Beschichtung oder einem erfindungsgemäßen Katalysator in Kontakt gebracht wird.

Die Abgasnachbehandlung findet bevorzugt bei einer Temperatur im Bereich von 150 bis 500 °C statt.

Die Abgase können beispielsweise aus Verbrennungsanlagen, Gasturbinen, Industrieanlagen oder Verbrennungsmotoren stammen. Besonders bevorzugt ist die Behandlung von Abgasen aus Verbrennungsmotoren, insbesondere Kleinmotoren, 2-Taktmororen und Motoren, die im "fetten" Lambda-Bereich betrieben werden. Die Verbrennungsabgase enthalten typischerweise Kohlenmonoxid, Kohlenwasserstoffe und/oder andere flüchtige organische Stoffe und/oder Stickoxide.

Unter flüchtigen organischen Stoffen (*engl. VOCs: volatile organic compounds*)*,* werden gasförmige oder flüchtige organisch Verbindungen verstanden, wie zum Beispiel organische Verbindungen mit einem Siedepunkt von beispielsweise bis zu 300°C oder mit einem Sublimationsverhalten. Typische Beispiele für solche VOCs sind Kohlenwasserstoffe und organische Lösungsmittel, wie sie beispielsweise in der chemischen Produktion, der Lack- oder Klebstoffherstellung oder -verarbeitung, bei Reinigungsprozessen usw. Verwendung finden. Kohlenwasserstoffe können beispielsweise auch beim Umgang mit fossilen Brennstoffen beispielsweise bei deren Herstellung oder Verteilung in die Abluft gelangen. Weitere Beispiele für VOCs sind organische Restmonomere aus der Herstellung und Verarbeitung von Polymeren oder auch Geruchsstoffe, wie sie beispielsweise im Lebensmittelbereich (Lebensmittelproduktion, Tiermast, Röstereien, Gärprozesse usw.) entstehen.

Nachfolgend sind die in der vorliegenden Erfindung verwendeten Messmethoden angegeben. Falls keine Testmethode angegeben ist, wurde die entsprechende ISO Methode zur Bestimmung des betreffenden Parameters verwendet, in der gültigen Fassung zum Anmelde-Zeitpunkt der vorliegenden Anmeldung. Falls keine spezifischen Messbedingungen angegeben sind, erfolgte die Messung bei Raumtemperatur (298.15 K) und Normaldruck (100 kPa).

### Spezifische BET-Oberfläche

Die spezifische BET-Oberfläche wurde mit Stickstoff als Adsorbat bei 77 K gemäß der BET-Theorie bestimmt (Mehrpunkt-Methode, ISO 9277:2010).

### Porenvolumen und Porendurchmesserverteilung

Die Bestimmung des Porenvolumens und der Porendurchmesserverteilung erfolgten mit Quecksilberporosimetrie gemäß ISO 15901-1:2022.

### Partikelgrößenverteilung (d₉₀)

Die Bestimmung der Partikelgrößen erfolgte mittels Laserbeugung gemäß ISO Standard 13320 mit einem Mastersizer 2000 (Malvern).

### Bestimmung des Edelmetallgehalts via ICP-MS

Der Edelmetallgehalt wurde mithilfe von Massenspektrometrie mit induktiv gekoppeltem Plasma (*engl. inductively coupled plasma mass spectrometry,* ICP-MS) bestimmt. Dafür wurde die jeweilige Probe in HF+HCI aufgeschlossen.

### Langzeitstabilität

Die Katalysatoren wurden vor dem Test der katalytischen Aktivität über 16 h einer Behandlung bei 1050 °C in Luft unterworfen. Damit wurde eine künstliche Alterung bewirkt, die das Aussetzen des Katalysators unter typischen Anwendungsbedingungen simulierte.

### Test der katalytischen Aktivität

Die Katalysatoren wurden in einer eigens angefertigten Katalysatortestanlage untersucht. Ein Gasgemisch aus synthetischer Luft mit 5000 Vol.-ppm CO, 1000 Vol.-ppm NOₓ, 500 Vol.-ppm Propan und 0,3 % Sauerstoff wurde mit einer Geschwindigkeit von 70000 h⁻¹ mit steigender Temperatur über die Katalysatoren geleitet. Die Mengenanteile von CO, NOₓ und Propan im Gasgemisch wurden vor und hinter dem Katalysator mittels FT-IR und FID gemessen, der Anteil von Sauerstoff mittels eines paramagnetischen Detektors. Darauf basierend wurde der jeweilige Umsatz (C) bestimmt. Für die Bestimmung der Light-off-Temperatur (T50) wurden die so erhaltenen Umsatzkurven ausgewertet und es wurde jeweils die Temperatur bestimmt, ab der 50 % Umsatz erfolgt.

Anhand der nachfolgenden Beispiele wird die Erfindung eingehender erläutert. Die Beispiele sind jedoch nicht als einschränkend zu verstehen.

Für alle Beispiele wurde ein mit La₂O₃ dotiertes Al₂O₃ und ein mit Nd₂O und La₂O₃ dotiertes CeZr-Oxid verwendet. Beide Oxide sind kommerziell erhältlich.

### VB - (Vergleichsbeispiel: Ru/Al₂O₃+ Ru/CeZr-Oxid)

80 g Al₂O₃ wurden mit einer Lösung von Ruthenium-Nitrosylnitrat (Ru-NN), enthaltend 80 % des aufzubringenden Ru, imprägniert und im Anschluss getrocknet, ebenso wurde 20 g CeZr-Oxid mit einer Ru-NN-Lösung enthaltend 20 % des aufzubringenden Ru behandelt. Zur Kalzinierung wurde das zuvor getrocknete Material in einem Ofen bei 500 °C für 4 h behandelt.

Das mit Ru ausgestattete Al₂O₃ wurde in Wasser aufgeschlämmt, anschließen wurde das mit Ru ausgestattete CeZr-Oxid hinzugegeben. Die erhaltene Suspension wurde gemahlen. Die gemahlene Suspension wurde auf ein keramisches Wabensubstrat aufgebracht. Die beschichtete Wabe wurde für 4 h bei 550 °C kalziniert. Die resultierende Washcoat-Beladung betrug 100 g/L, was einem Ruthenium-Gehalt von 3,5 g/L entsprach.

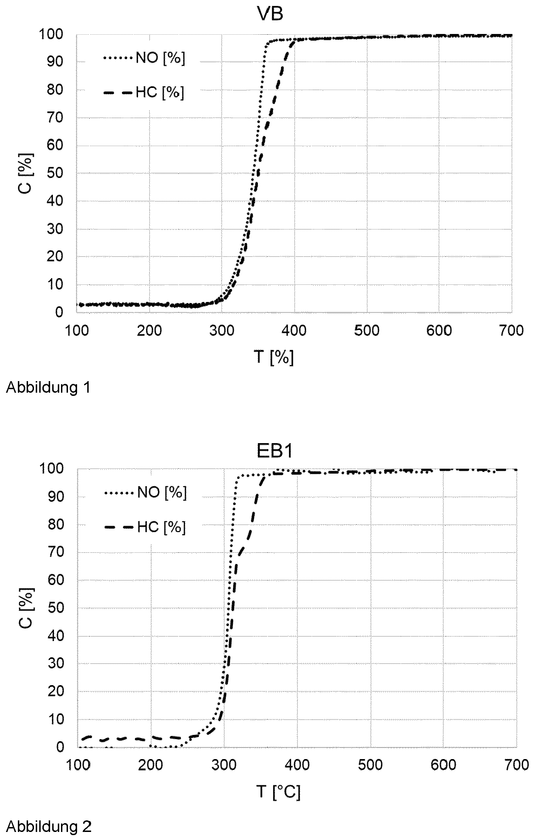

In Abbildung 1 ist der temperaturabhängige Umsatz von NOₓ und HC des frisch hergestellten Katalysators gezeigt.

### EB1 (Ru/Al₂O₃)

80 g Al₂O₃ wurden mit einer Ru-NN-Lösung, enthaltend 90 % des aufzubringenden Ru imprägniert und im Anschluss getrocknet, ebenso wurde 20 g CeZr-Oxid mit einer Ru-NN-Lösung enthaltend 10 % des aufzubringenden Ru behandelt. Zur Kalzinierung wurde das getrocknete Material in einem Ofen bei 500 °C für 4 h behandelt.

Das mit Ru ausgestattete Al₂O₃ wurde in Wasser aufgeschlämmt, anschließen wurde das mit Ru ausgestattete CeZr-Oxid hinzugegeben und die gesamte Suspension wurde gemahlen. Die gemahlene Suspension wurde auf ein keramisches Wabensubstrat aufgebracht. Die beschichtete Wabe wurde für 4 h bei 550 °C kalziniert. Die resultierende Washcoat-Beladung betrug 100 g/L, was einem Ruthenium-Gehalt von 10,6 g/L entsprach.

Abbildung 2 illustriert anhand des NOₓ- und HC-Umsatzes die Katalysatorleistung des erfindungsgemäß hergestellten Katalysators.

### EB2 (Ru/Al₂O₃)

Die Präparation erfolgte analog zum in EB1 angegebenen Verfahren, jedoch wurde nur das Al₂O₃ mit einer Ru-NN-Lösung, enthaltend 100 % des aufzubringenden Ru behandelt. Die resultierende Washcoat-Beladung betrug 100 g/L, was einem Ruthenium-Gehalt von 3,5 g/L entsprach.

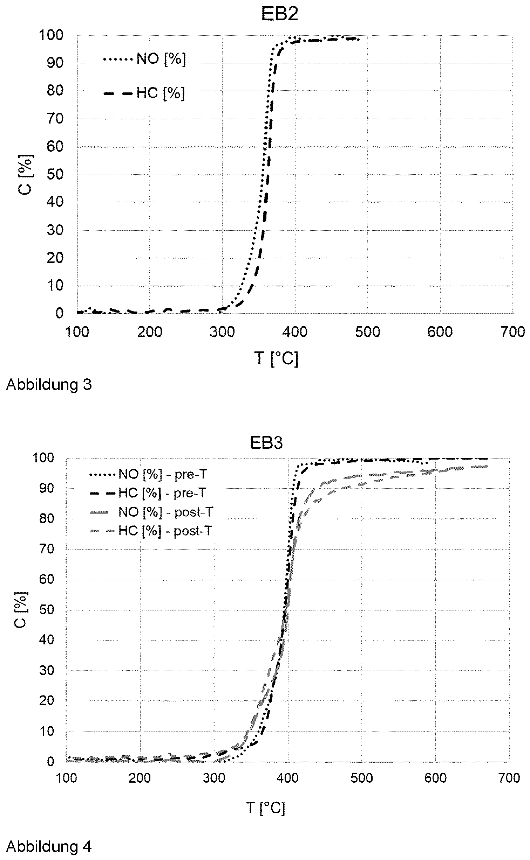

In Abbildung 3 ist die Katalysatorleistung dieses erfindungsgemäßen Katalysators gezeigt. Zusätzlich zur Katalysatorleistung des frishc hergestellten Katalyysators (pre-T) ist die Leistung nach der künstlichen Alterung (post-T) gegenübergestellt. Die nahezu identischen Verläufe verdeutlichen die besondere Stabilität des Katalysators.

### EB3 (Ru/Al₂O₃)

Die Präparation erfolgte analog zum in EB2 angegebenen Verfahren, jedoch wurde weniger Ru-NN in der Lösung eingesetzt. Die resultierende Washcoat-Beladung betrug 100 g/L, was einem Ruthenium-Gehalt von 1,8 g/L entsprach.

In Abbildung 4 ist die Katalysatorleistung dieses erfindungsgemäßen Katalysators gezeigt.

### EB4 (RuIr/Al₂O₃)

Die Präparation erfolgte analog zum in EB2 angegebenen Verfahren. Zur Imprägnierung des Al₂O₃ wurde eine Lösung aus Ru-NN und Iridium als Iridiumchlorid in Wasser verwendet. Die resultierende Washcoat-Beladung betrug 100 g/L, was einem Ruthenium-Gehalt von 1,8 g/L entsprach.

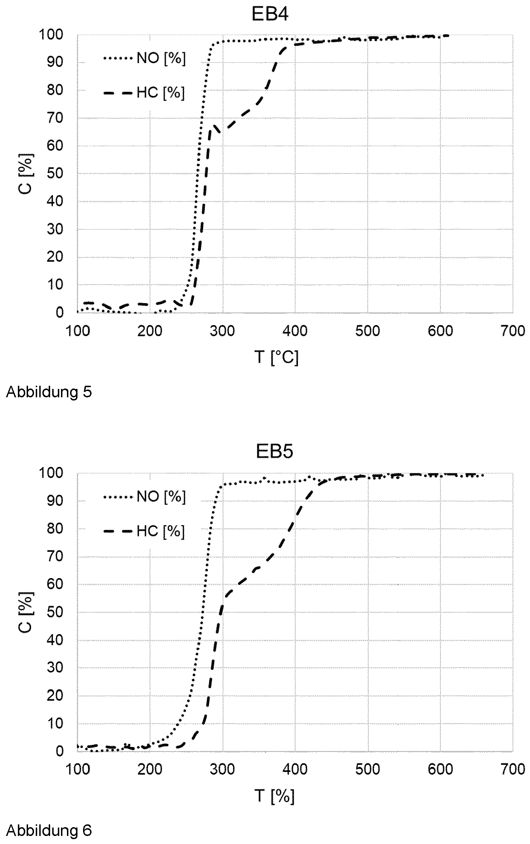

In Abbildung 5 ist die Katalysatorleistung dieses erfindungsgemäßen Katalysators gezeigt.

### EB5 (RuPt/Al₂O₃)

Die Präparation erfolgte analog zum in EB2 angegebenen Verfahren. Zur Imprägnierung des Al₂O₃ wurde eine Lösung aus Ru-NN und Platin als Platinnitrat in Wasser verwendet. Die resultierende Washcoat-Beladung betrug 100 g/L, was einem Ruthenium-Gehalt von 1,8 g/L entsprach.

In Abbildung 6 ist die Katalysatorleistung dieses erfindungsgemäßen Katalysators gezeigt.

### EB6 (RuIr/Al₂O₃+ RuPt/CeZr-Oxid)

Al₂O₃ wurde in Wasser aufgeschlämmt und mit einer Ru-NN-Lösung und Iridiumchlorid in Wasser versetzt. Die Suspension wurde erhitzt, anschließend wurde eine NaOH-Lösung zugegeben und die feste von der flüssigen Phase mittels Filtration getrennt.

CeZr-Oxid wurde in Wasser aufgeschlämmt und mit einer Ru-NN-Lösung und Platinnitrat in Wasser vermischt. Die Suspension wurde erhitzt, anschließend wurde eine NaOH-Lösung zugegeben und die feste von der flüssigen Phase mittels Filtration getrennt.

Die beiden mit den ausgefällten Edelmetallen ausgestatteten Oxide wurden vermischt, getrocknet und zur Kalzinierung in einem Ofen bei 400 °C für 2 h behandelt. Das kalzinierte Material wurde in Wasser aufgeschlämmt und gemahlen.

Die Beschichtung eines keramischen Wabenkörpers erfolgte analog wie in EB2 beschrieben. Die resultierende Beladung betrug 100 g/L, was einem Ruthenium-Gehalt von 1,8 g/L entsprach.

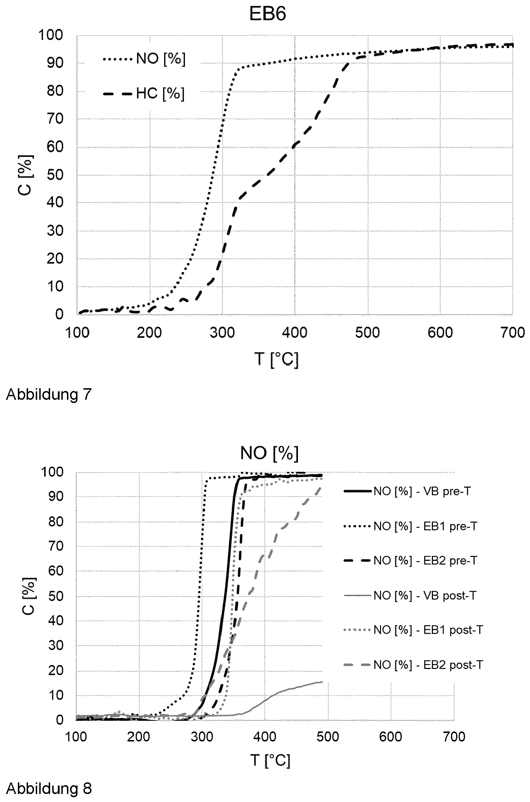

In Abbildung 7 ist die Katalysatorleistung dieses erfindungsgemäßen Katalysators gezeigt.

**Tabelle 1 fasst die Merkmale der getesteten Katalysatoren und die jeweilige Gesamt-Edelmetallbeladung zusammen.**

| | | Beladung Edelmetall [g/L] |
|---|---|---|
| VB | Ru/ Al₂O₃ | 3,5 |
| | Ru/ CeZr-Oxid | |
| EB1 | Ru/ Al₂O₃ | 10,6 |
| | CeZr-Oxid | |
| EB2 | Ru/ Al₂O₃ | 3,5 |
| | CeZr-Oxid | |
| EB3 | Ru/ Al₂O₃ | 1,8 |
| | CeZr-Oxid | |
| EB4 | RuIr/ Al₂O₃ | 2,7 |
| | CeZr-Oxid | |
| EB5 | RuPt/ Al₂O₃ | 3,5 |
| | CeZr-Oxid | |
| EB6 | RuPtlr/ Al₂O₃ | 4,4 |
| | Rulr/CeZr-Oxid | |

Die Ergebnisse der EB1 bis EB6 demonstrieren, dass die verschiedenen Ausführungsformen der erfindungsgemäßen Katalysatoren bei der Entfernung von Stickoxiden aktiv sind. Bereits eine relativ geringe Edelmetall-Beladung wie in EB3 ist dabei ausreichend effektiv. Insbesondere die Kombination von Ruthenium mit einem weiteren Edelmetall zeigte außerdem eine vorteilhafte Absenkung der T50.

In Abbildung 8 sind die katalytische Aktivität für den NOx-Umsatz der nur Ruthenium enthaltenden Katalysatoren gemäß VB, EB1 und EB2 jeweils vor (pre-T) und nach (post-T) der Temperaturbehandlung gegenübergestellt. Vor der Temperaturbehandlung waren die Katalysatorleistungen vergleichbar. Die katalytische Aktivität, insbesondere die Light-off-Temperatur, der erfindungsgemäßen Katalysatoren zeigte jedoch nach dieser künstlichen Alterung nur eine geringe Veränderung, wogegen der Katalysator des Vergleichsbeispiels (VB) deutlich an katalytischer Aktivität verlor. Insbesondere der Vergleich zwischen den Katalysatoren von VB und EB2, die die gleiche Ruthenium-Beladung aufwiesen, verdeutlicht die erhöhte Stabilität der erfindungsgemäßen Katalysatoren. Das Trägern des Rutheniums auf dem Al₂O₃ erhöht mutmaßlich dessen Stabilität und damit die katalytische Wirksamkeit unter Einsatzbedingungen, was eine Minimierung der Edelmetallausstattung der Katalysatoren erlaubt.

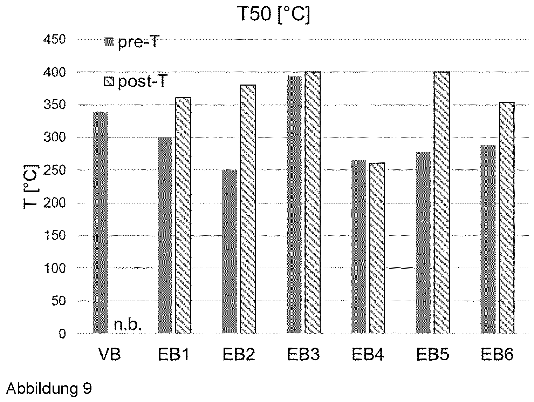

In Abbildung 9 sind die ermittelten T50-Werte für den NOx-Umsatz der getesteten Katalysatoren in frischen und gealtertem Zustand gegenübergestellt. Für den Katalysator des Vergleichsbeispiels konnte der T50-Wert nicht mehr bestimmt werden. Die Kombination des Rutheniums mit einem weiteren Edelmetall, insbesondere mit Iridium, erwies sich zusätzlich zur Absenkung der Light-Off-Temperatur als vorteilhaft für die Stabilität der Katalysatoren.

## Patentansprüche

1. **Katalytisch wirksame Zusammensetzung** umfassend
a) ein mindestens mit Ruthenium ausgestattetes dotiertes refraktäres Oxid ausgewählt aus der Gruppe bestehend aus Aluminiumoxid, Magnesiumoxid, Siliziumoxid, Molybdänoxid, Wolframoxid, Titanoxid, deren Mischungen und Verbundoxiden von zwei oder mehr hiervon und
b) ein Cer-Zirkonium-Oxid, das mindestens ein von Cer verschiedenes Element aus der Gruppe der seltenen Erden umfasst.

2. Katalytisch wirksame Zusammensetzung gemäß Anspruch 1, wobei das dotierte refraktäre Oxid ein Aluminiumoxid oder ein Mischoxid oder Verbundoxid von Aluminiumoxid ist.

3. Katalytisch wirksame Zusammensetzung gemäß Anspruch 1 oder 2, wobei das dotierte refraktäre Oxid ein mit Lanthanoxid dotiertes Aluminiumoxid, ein mit Lanthanoxid dotiertes Mischoxid von Aluminiumoxid oder ein mit Lanthanoxid dotiertes Verbundoxid von Aluminiumoxid ist.

4. Katalytisch wirksame Zusammensetzung gemäß einem der vorangegangenen Ansprüche, wobei der Anteil des dotierten refraktären Oxids im Bereich von 10 bis 95 Gew.-% liegt.

5. Katalytisch wirksame Zusammensetzung gemäß einem der vorangegangenen Ansprüche, wobei das dotierte refraktäre Oxid mit 0,1 Gew.-% bis 25 Gew.-% Ruthenium ausgestattet ist, bezogen auf die Gesamtmenge von dotiertem refraktären Oxid und Ruthenium.

6. Katalytisch wirksame Zusammensetzung gemäß einem der vorangegangenen Ansprüche, wobei die katalytisch aktive Zusammensetzung Ruthenium in einer Menge von 0,05 bis 20 Gew.-% umfasst, bezogen auf die Gesamtmenge von dotiertem refraktären Oxid, Ruthenium und Cer-Zirkonium-Oxid.

7. Katalytisch wirksame Zusammensetzung gemäß einem der vorangegangenen Ansprüche, wobei das dotierte refraktäre Oxid mit mindestens einem weiteren Edelmetall ausgestattet ist, das ausgewählt ist aus der Gruppe bestehend aus Platin (Pt), Palladium (Pd), Iridium (Ir), Rhodium (Rh) und deren Kombinationen.

8. Katalytisch wirksame Zusammensetzung gemäß Anspruch 7, wobei das dotierte refraktäre Oxid mit einer Kombination aus Ruthenium und Iridium; Ruthenium und Platin; Ruthenium und Palladium; Ruthenium, Platin und Iridium; Ruthenium, Palladium und Iridium oder Ruthenium, Palladium und Platin ausgestattet ist.

9. Katalytisch wirksame Zusammensetzung gemäß Anspruch 7 oder 8, wobei das dotierte refraktäre Oxid in einer Menge von 0,2 bis 30 Gew.-% mit Ruthenium und dem mindestens eine weiteren Edelmetall ausgestattet ist, bezogen auf die Gesamtmenge von dotiertem refraktären Oxid, Ruthenium und dem mindestens einen weiteren Edelmetall.

10. Katalytisch wirksame Zusammensetzung gemäß einem der vorangegangenen Ansprüche, wobei das Cer-Zirkonium-Oxid mit mindestens einem Edelmetall ausgestattet ist.

11. Katalytisch wirksame Zusammensetzung gemäß einem der vorangegangenen Ansprüche, wobei die Edelmetallausstattungen des dotierten refraktären Oxids und des Cer-Zirkonium-Oxids verschieden sind.

12. **Verfahren zur Herstellung einer katalytisch wirksamen Zusammensetzung** gemäß einem der Ansprüche 1 bis 11, umfassend die Schritte:
i) Bereitstellen des mindestens mit Ruthenium ausgestatten dotierten refraktären Oxids ausgewählt aus der Gruppe bestehend aus Aluminiumoxid, Magnesiumoxid, Siliziumoxid, Molybdänoxid, Wolframoxid, Titanoxid, deren Mischungen und Verbundoxiden von zwei oder mehr hiervon,
ii) Bereitstellen des Cer-Zirkonium-Oxids das mindestens ein von Cer verschiedenes Element aus der Gruppe der seltenen Erden umfasst,
iii) Mischen des mindestens mit Ruthenium ausgestatten dotierten refraktären Oxids und des Cer-Zirkonium-Oxids.

13. **Zubereitung, enthaltend**
a) eine katalytisch wirksame Zusammensetzung gemäß einem der Ansprüche 1 bis 11 und
b) eine Flüssigkeit.

14. **Katalysator** umfassend die katalytisch wirksame Zusammensetzung gemäß einem der Ansprüche 1 bis 11 und einen hitzebeständigen Träger.

15. **Verfahren zur Abgasnachbehandlung,** wobei ein Abgasstrom mit einer katalytisch wirksamen Zusammensetzung gemäß einem der Ansprüche 1 bis 11 oder einem Katalysator gemäß Anspruch 14 in Kontakt gebracht wird.
